# DEMANDE DE BREVET EUROPEEN

(11) **EP 3 112 225 A1**
(43) Date de publication de la demande: **04.01.2017**
(21) Numéro de dépôt: 16176439.4
(22) Date de dépôt: 27.06.2016
(51) Int. Cl.: B60S 1/40

(54) **ORGANE POUR UN SYSTÈME DE CONNEXION D'UN BALAI D'ESSUIE-GLACE À DE MULTIPLES BRAS D'ESSUIE-GLACE**

(30) Priorité: 29.06.2015 FR 1556022
(71) Demandeur: Valeo Systèmes d'Essuyage, 78322 Le Mesnil Saint Denis (FR)
(72) Inventeur: GAUCHER, Vincent, 63720 ENNEZAT (FR); MOULEYRE, Guillaume, 63122 Saint Genès Champanelle (FR)
(74) Mandataire: Vincent, Catherine Marie Marguerite

(57) **Abrégé**

Organe (10) pour un système de connexion entre un balai (12) d'essuie-glace et un bras (22) d'entraînement dudit balai, ledit organe (10) comportant un corps (14) de section en forme de U comportant une base (16) et deux parois latérales (18), et comprenant au moins un premier moyen de verrouillage (28) escamotable configuré pour coopérer avec un bras (22) ayant une pièce terminale (20) d'un premier type et porté par au moins une première patte élastique (32) élastique, comprenant au moins une première encoche (40), ledit organe (10) comprenant au moins un deuxième moyen de verrouillage (38) escamotable configuré pour coopérer avec un bras (36) ayant une pièce terminale (34) d'un second type, ledit deuxième moyen de verrouillage (38) étant porté par au moins une deuxième patte élastique (42) élastique, caractérisé en ce que les première et deuxième pattes élastiques (32, 42) prennent naissance sur la base (16) et s'étendent dans le plan de la base (16).

## Description

### DOMAINE TECHNIQUE

La présente invention concerne un organe pour un système de connexion d'un balai d'essuie-glace, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la structure plate du balai, alors que l'adaptateur est interposé entre le connecteur et le bras. L'adaptateur est une pièce intermédiaire qui permet la liaison et la fixation du connecteur sur le bras d'entraînement, et qui est verrouillée dans une pièce terminale du bras d'entraînement par l'intermédiaire d'un moyen de verrouillage escamotable.

Dans la technique actuelle, il n'existe que peu de variétés d'adaptateurs pouvant s'adapter sélectivement à plusieurs variétés de pièces terminales ou d'extrémités de bras d'entrainement de types différents, ce qui n'est ni pratique ni économique. Cet état de fait résulte de la conception même du rappel élastique des moyens de verrouillage. Les adaptateurs comportent généralement un corps présentant une section en forme de U comportant une paroi supérieure ou base et deux parois latérales. La paroi supérieure ou base comporte les moyens de verrouillage qui sont généralement conformés sous la forme de boutons de verrouillage qui sont montés sur des pattes élastiques et qui sont destinés à s'encliqueter dans des orifices correspondants des pièces terminales des bras.

Il existe différents types de bras, comportant chacun des pièces terminales différentes où des orifices de tailles différentes et/ou positionnés différemment sont ménagés.

Les adaptateurs étant généralement de petites dimensions, l'encombrement longitudinal total des boutons et de leurs pattes élastiques ne permet généralement pas de disposer de plusieurs boutons de verrouillage sur la face supérieure de l'adaptateur, ce qui limite le nombre de possibilités de pièces terminales différentes pour lesquelles l'adaptateur peut être prévu.

Par ailleurs, l'adaptateur doit remplir d'autres fonctions, notamment celle d'assurer le pivotement du bras, et consécutivement du connecteur, par rapport à l'adaptateur. A cet effet la cavité délimitée par la base et les deux parois latérales doit être à même d'accueillir un connecteur solidaire du balai.

Il existe donc un réel besoin d'un adaptateur universel apte à être monté sur au moins deux, voire beaucoup plus, de pièces terminales de bras d'essuie-glace de différents types, lesdites pièces terminales disposant chacune d'un orifice dont la taille et/ou le positionnement sont spécifiques à ladite pièce terminale.

Une telle solution est ainsi particulièrement avantageuse et économique.

### EXPOSE DE L'INVENTION

L'invention propose pour satisfaire à ce besoin un organe pour un système de connexion d'un balai d'essuie-glace à un bras d'entraînement dudit balai comportant un nombre élevé de moyens de fixation. L'invention propose à cet effet un organe susceptible d'accueillir un nombre élevé de boutons de verrouillage, et de pattes élastiques permettant d'assurer le rappel élastique de ces boutons.

Dans ce but, l'invention propose un organe pour un système de connexion entre un balai d'essuie-glace et un bras d'entraînement dudit balai, ledit organe étant d'orientation sensiblement longitudinale et comportant au moins un corps présentant sensiblement une section en forme de U comportant une base et deux parois latérales, ledit organe comprenant au moins un premier moyen de verrouillage escamotable configuré pour coopérer avec un bras ayant une pièce terminale d'un premier type, ledit premier moyen de verrouillage comprenant au moins une première patte élastique, ladite première patte élastique comprenant au moins une première encoche, ledit organe comprenant au moins un deuxième moyen de verrouillage escamotable configuré pour coopérer avec un bras ayant une pièce terminale d'un second type, ledit deuxième moyen de verrouillage comprenant au moins une deuxième patte élastique, caractérisé en ce que les première et deuxième pattes élastiques prennent naissance sur la base et s'étendent au moins en partie dans une épaisseur de la base.

Cette configuration permet de disposer sur la face supérieure de l'organe de deux moyens de verrouillage, par exemple de deux boutons, selon un encombrement longitudinal réduit.

Dans la description ci-dessous, le caractère élastique ou flexible des pattes constitutives des moyens de verrouillage signifie que celles-ci sont configurées pour être élastiquement déformables, c'est-à-dire en mesure de reprendre sa position initiale dite de repos à un effort de commande correspondant à une mise ne fonctionnement.

Selon d'autres caractéristiques de l'invention :
- la première patte élastique, dite première patte, comporte au moins deux bras reliés à la base du corps de l'organe, entre lesquels est délimitée une encoche,
- le deuxième moyen de verrouillage s'étend dans l'encoche,
- les premier et deuxième moyens de verrouillage sont constitués de premier et deuxième boutons poussoirs respectifs qui s'étendent dans l'épaisseur de la base ou au-dessus d'un pan délimitant une face de la base tourné vers le la pièce terminale,
- le premier bouton poussoir est ménagé à une extrémité distale de la première patte élastique,
- le deuxième bouton poussoir est ménagé à une extrémité distale de la deuxième patte élastique,
- l'organe comprend un moyen de pivotement autour d'un axe transversal, et le corps présente la forme d'un U dans une section passant par l'axe transversal, la forme en U comprenant au moins la paroi supérieure et les deux parois latérales, ménagées au droit du moyen de pivotement,
- les premières et deuxièmes pattes élastiques s'étendent suivant l'orientation longitudinale de l'organe, c'est-à-dire majoritairement selon cette orientation longitudinale,
- l'organe comprend un troisième moyen de verrouillage configuré pour coopérer avec un bras ayant une pièce terminale d'un troisième type, ledit troisième moyen de verrouillage comprenant au moins une troisième patte élastique, qui s'étend à partir d'une face interne d'une des parois latérales du corps,
- le corps comporte une première extrémité par laquelle il est apte à être introduit dans chaque pièce terminale, et une seconde extrémité opposée à la première extrémité, et les premier, deuxième et troisième moyens de verrouillage sont alignés longitudinalement entre les première et seconde extrémités,
- l'organe comprend un quatrième moyen de verrouillage configuré pour coopérer avec un bras ayant une pièce terminale d'un quatrième type, ledit quatrième moyen de verrouillage comprenant au moins une quatrième patte élastique, qui s'étend dans le prolongement d'au moins une des parois latérales du corps,
- l'organe comporte une tête formée à la seconde extrémité de l'organe, la tête est ici plus haute et plus large que le corps,
- un logement de réception d'au moins l'une des pièces terminales du bras est agencé entre le corps et au moins une aile latérale au corps issue de la tête,
- l'organe est réalisé par injection d'un matériau plastique,
- la pièce terminale d'un second type est distinct de la pièce terminale du premier type au moins en ce qu'un orifice, par exemple ménagé sur la face supérieure de la pièce terminale, dont la taille et/ou le positionnement sont spécifiques,
- au moins une partie de la deuxième patte élastique s'étend dans la première encoche,
- l'organe est configuré pour être monté par translation suivant la direction longitudinale dans le premier type de pièce terminale et dans le second type de pièce terminale,
- le premier moyen de verrouillage étant logé dans une ouverture formée dans la base du corps,
- la deuxième patte élastique s'étend au moins en partie en regard de l'ouverture,
- le premier moyen de verrouillage est plus proche de la première extrémité du corps de l'organe que le deuxième moyen de verrouillage,
- les premier, deuxième et troisième moyens de verrouillage sont alignés longitudinalement entre les première et seconde extrémités,
- l'ouverture débouche à, ou au niveau de, la première extrémité du corps.

L'invention concerne enfin un balai d'essuie-glace comportant un organe du type décrit précédemment.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace, un bras d'entraînement du balai, et un système de connexion du balai d'essuie-glace au bras,
- les figures 2A et 2B sont des vues en perspective de dessus d'un organe selon l'invention ;
- la figure 3 est une vue en perspective de dessous d'un organe selon l'invention,
- les figures 4 à 9 sont des vues respectives en perspective des pièces terminales des premier à sixième bras destinés à coopérer avec l'organe selon l'invention,
- les figures 10 à 15 sont des vues assemblées en perspective de dessus de l'organe et des pièces terminales des premier à sixième bras selon l'invention,
- La figure 16 est une vue assemblée en perspective de dessous de l'organe et de la pièce terminale du premier bras selon l'invention.

### DESCRIPTION DETAILLEE

Dans la description qui va suivre, des chiffres de référence identiques désignent des pièces identiques ou ayant des fonctions similaires.

Il faut noter que les figures exposent l'invention de manière détaillée pour mettre en oeuvre l'invention, lesdites figures pouvant bien entendu servir à mieux définir l'invention le cas échéant.

De plus, dans la description qui suit, les dénominations longitudinales ou latérales se réfèrent à l'orientation du balai d'essuie-glace ou du bras d'entraînement selon l'invention. La direction longitudinale correspond à l'axe principal du balai d'essuie-glace, alors que les orientations transversales et verticales correspondent à des droites concourantes, c'est-à-dire qui croisent la direction longitudinale, notamment perpendiculaires à l'axe longitudinal du balai d'essuie-glace. Pour la bonne compréhension de l'invention, les figures pourront être orientées en référence au repère "X-Y-Z".

Enfin, les directions référencées comme supérieures ou inférieures correspondent à des orientations perpendiculaires au plan de rotation du balai d'essuie-glace, la dénomination inférieure étant tournée vers le plan du pare-brise, et la dénomination supérieure étant tournée à l'opposé de ce plan.

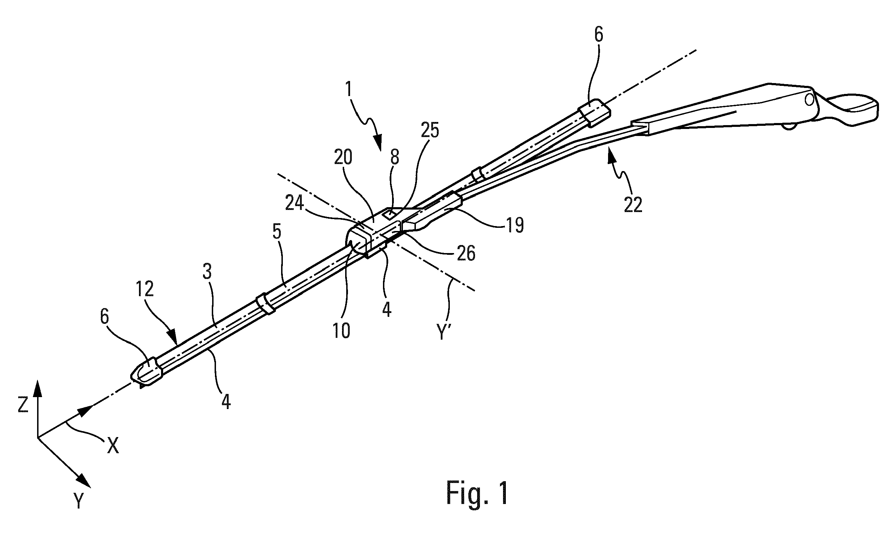

Il est illustré à la figure 1 un essuie-glace 1 comportant notamment un balai d'essuie-glace 12 et un bras 22 d'entraînement du balai d'essuie-glace 12.

Le balai d'essuie-glace 12 est de préférence du type *flat blade* et il comprend un corps longitudinal 3 orienté sensiblement suivant un axe longitudinal X, une lame d'essuyage 4, en général en caoutchouc ou en matériau élastomère, et au moins une vertèbre (non visible) qui rigidifie la lame et favorise son application sur un pare-brise de véhicule.

Le corps 3 du balai d'essuie-glace 12 peut comporter un déflecteur aérodynamique supérieur 5 destiné à améliorer le fonctionnement du système d'essuyage, le but de ce déflecteur étant d'améliorer le plaquage du balai d'essuie-glace sur le pare-brise et donc la performance aérodynamique de l'essuie-glace.

Le balai d'essuie-glace 12 peut comprendre en outre des embouts d'extrémité 6 ou agrafes d'accrochage de la lame 4 et de la vertèbre sur le corps 3, ces embouts 6 étant situés à chacune des extrémités longitudinales du corps 3.

Le balai d'essuie-glace 12 comprend sensiblement en son milieu un connecteur 4 intermédiaire. Un organe 10 formant adaptateur solidaire du bras 22 est monté sur le connecteur 4 de façon à garder un degré de liberté en pivotement autour d'un axe de rotation Y' qui est un axe transversal parallèle à une direction transversale Y sensiblement perpendiculaire à l'axe longitudinal X du balai d'essuie-glace 12. Ce degré de liberté autorise un pivotement du balai d'essuie-glace 12 vis-à-vis du bras 22 et permet ainsi au balai d'essuie-glace 12 de suivre la courbure du pare-brise lors de ses déplacements. L'organe 10 est destiné configuré pour être monté par translation suivant la direction longitudinale X dans une pièce terminale 20 du bras 22, dont il peut être désolidarisé par appui sur un moyen de verrouillage.

Le bras 22 est destiné à être entraîné par un moteur pour suivre un mouvement angulaire de va-et-vient permettant d'évacuer l'eau et éventuellement d'autres éléments indésirables recouvrant le pare-brise. L'adaptateur 10 assure la liaison du balai d'essuie-glace 12 au bras 22 et en particulier à la pièce terminale 20 du bras 22 qui peut être formée d'une seule pièce avec le bras 22, ou rapportée et fixée sur celui-ci.

Dans l'exemple représenté, la pièce terminale 20 du bras forme une chape à section transversale sensiblement en U.

La pièce terminale 20 a une forme allongée dont l'axe d'allongement est en général sensiblement parallèle ou coaxial à l'axe d'allongement X ou longitudinal du balai d'essuie-glace 12. Dans la suite de la présente description, de manière non limitative de celle-ci, on considérera que l'axe d'allongement de la pièce terminale 20 correspond à l'axe X.

La pièce terminale 20 comprend une partie 19 de liaison au reste du bras 14. Cette partie 19 a une forme générale allongée et s'étend sensiblement parallèlement à l'axe X et à distance de cet axe X, comme cela est visible sur la figure 1. La partie 19 est reliée à une extrémité arrière du reste de la pièce terminale 20.

En référence à la figure 1, la pièce terminale 20 comprend deux parois latérales 26 dont les bords longitudinaux supérieurs sont reliés entre eux par une paroi transversale supérieure 24. Les parois latérales 26 et la paroi 24 délimitent entre elles un espace de logement de l'adaptateur 10. Les parois latérales 26 peuvent comprendre au niveau de leurs bords longitudinaux inférieurs des moyens de retenue de l'adaptateur 10, qui seront décrits plus en détail dans la suite de la présente description.

La paroi supérieure 24 peut comprendre un orifice 25 traversant de forme complémentaire du bouton poussoir 8. En position de montage, le bouton poussoir 8 est logé dans cet orifice 25 et peut traverser ce dernier de façon à être en saillie sur la face supérieure de la paroi 24. Le montage du bouton poussoir 8 dans l'orifice 25 se fait par simple engagement ou emboîtement, de préférence par encliquetage élastique.

Dans cette conception, l'organe 10 ne peut être monté que dans le type déterminé de bras 22 qui a été illustré, et plus particulièrement dans le type particulier de pièce terminale 20 correspondante, ce qui n'est ni pratique ni économique car il est nécessaire, lorsque l'on désire monter le balai d'essuie-glace 12 sur un bras différent, d'utiliser un autre type d'organe ou adaptateur 10. L'organe 10 ne peut pas, par exemple être monté dans une pièce terminale possédant un orifice 25 de taille différente et/ou positionné différemment.

Un inconvénient des systèmes de l'art antérieur est que, afin d'être escamotables, ils doivent être montés à l'extrémité de pattes élastiques qui sont généralement orientées suivant la direction longitudinale X. Ces pattes doivent être d'une longueur suffisante pour fléchir suffisamment et disposer ainsi d'une élasticité suffisante pour permettre un débattement vertical suffisant du bouton. Or, les organes ou adaptateurs 10 étant généralement de petites dimensions, l'encombrement longitudinal total des boutons et de leurs pattes élastiques ne permet généralement pas de disposer une pluralité de boutons de verrouillage sur paroi supérieure de l'adaptateur, ce qui limite le nombre de possibilités de pièces terminales pour lesquelles l'adaptateur peut être prévu.

Il existe donc un réel besoin d'un adaptateur universel apte à être monté sélectivement sur au moins deux, voire beaucoup plus, pièces terminales distinctes de bras d'essuie-glace, sans perturber le pivotement du connecteur 4 du balai 12.

L'invention permet de proposer à cet effet un organe pour un système de connexion d'un balai d'essuie-glace à un bras d'entraînement dudit balai comportant un nombre élevé de moyens de fixation, et notamment un nombre élevé de boutons de verrouillage portés par des pattes élastiques de faible encombrement.

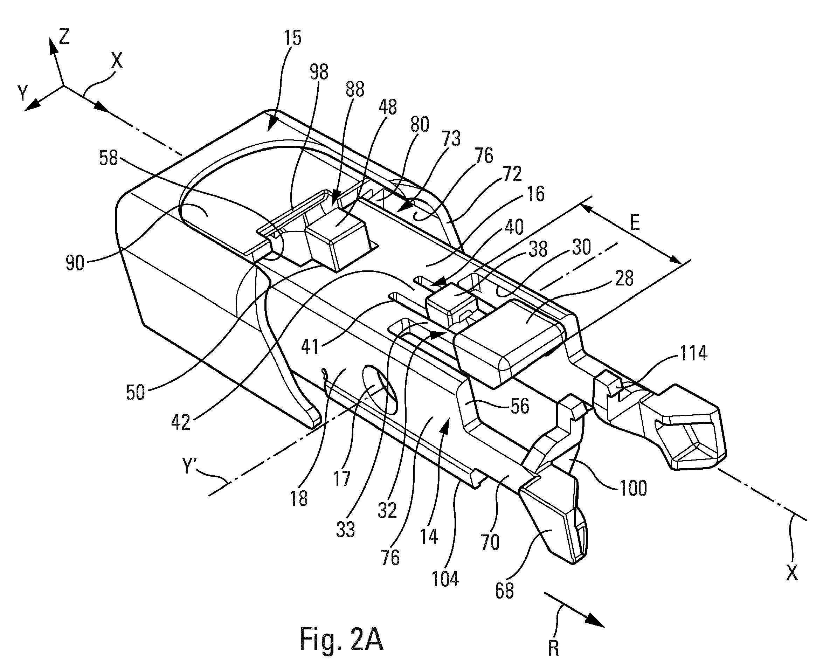

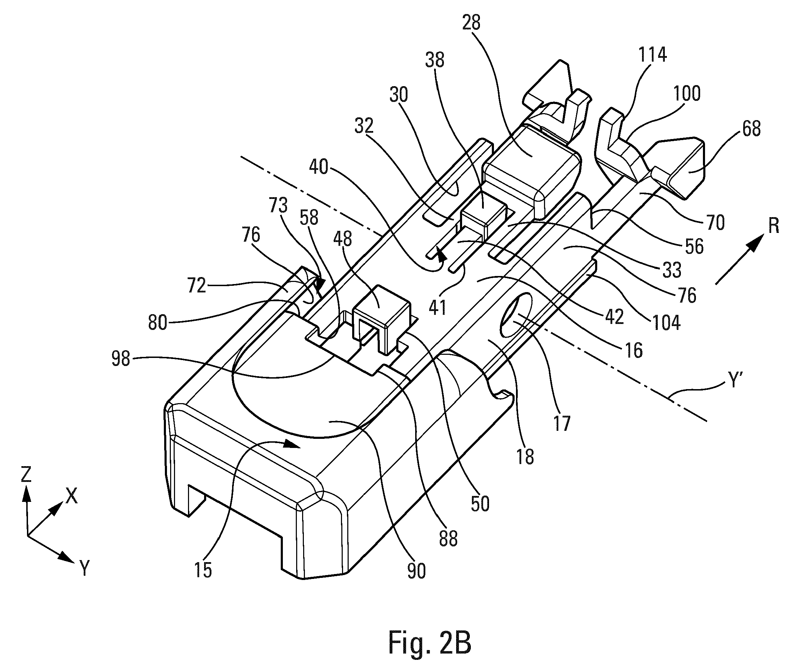

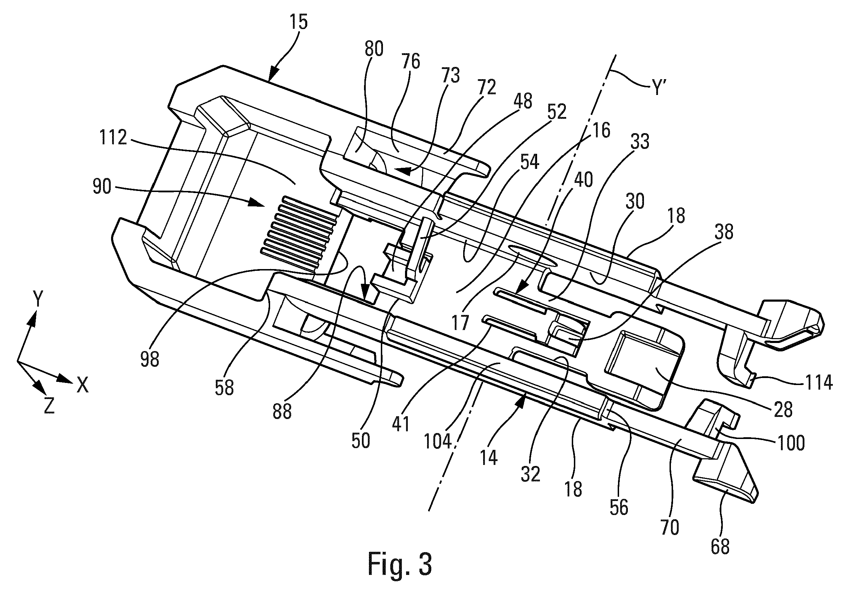

Dans ce but, l'invention propose un organe 10 ou adaptateur pour un système de connexion d'un balai d'essuie-glace à un bras d'entraînement 22 dudit balai d'essuie-glace 12 réalisé conformément aux figures 2A, 2B et 3.

L'organe 10 est d'une orientation sensiblement longitudinale X et il comporte au moins un corps 14 présentant sensiblement une section en forme de U. Ce corps 14 comporte une paroi supérieure 16, autrement appelée base, et deux parois latérales 18 sensiblement parallèles entre elles et sensiblement perpendiculaires à la base 16. Les parois latérales comportent par exemple deux perçages 17 alignés transversalement destinés à matérialiser l'axe de pivotement Y' du balai d'essuie-glace 12, par exemple en recevant des tétons complémentaires (non représentés) portés par le connecteur 4.

Il sera compris que le moyen de pivotement pourrait prendre bien d'autres formes, par exemple, et de manière non limitative de l'invention, des perçages destinés à recevoir un axe traversant le connecteur du bras ou destinés à recevoir des paliers issus du connecteur, ou des bossages non traversant destinés à recevoir les paliers faisant saillie sur le connecteur pour former deux liaisons de type rotule emboîtables par écartement des parois latérales 18 du corps 14. Alternativement, l'organe peut comprendre deux protubérances orientées l'une vers l'autre et issues de matière avec l'organe. Celles-ci sont alors reçues dans des cavités ménagées dans le connecteur.

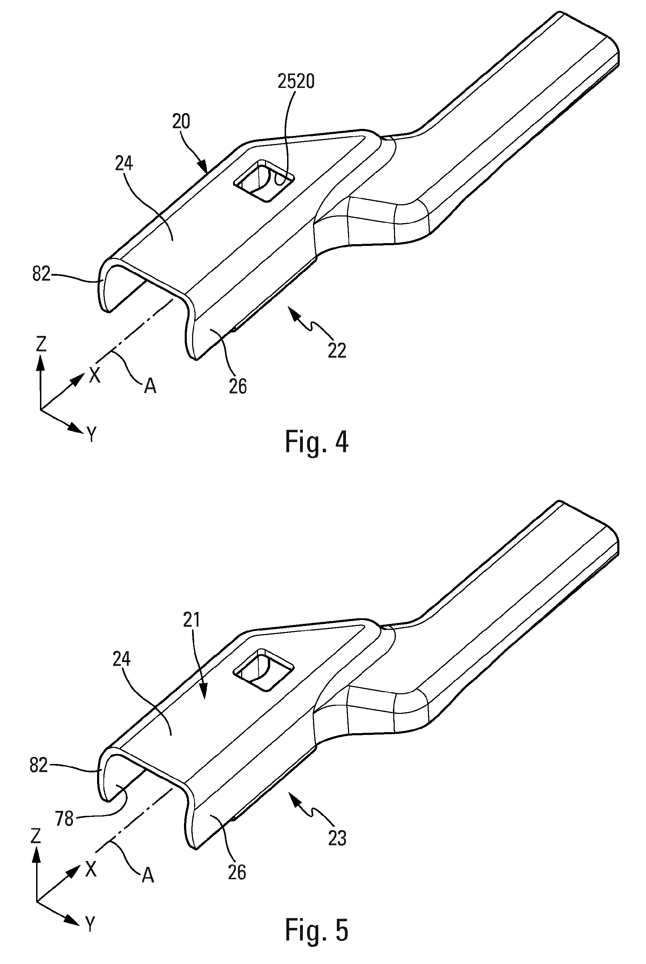

L'organe 10 est configuré pour être monté par translation suivant la direction longitudinale X dans une pièce terminale 20 d'un premier type de bras 22, qui sera appelée dans la suite de la présente description première pièce terminale 20 du premier bras 22, comme cela a été précédemment représenté à la figure 1 et comme cela est représenté à la figure 4. La première pièce terminale 20 est délimitée par une paroi supérieure 24 et deux parois latérales 26 qui sont sensiblement parallèles entre elles et perpendiculaires à la paroi supérieure 24. Une telle première pièce terminale 20 a par exemple été représentée à la figure 4.

Comme l'illustrent les figures 2A et 2B, le corps 14 de l'organe 10 selon l'invention comporte au moins un premier moyen de verrouillage 28 qui est configuré pour coopérer avec ladite première pièce terminale 20 du premier bras 22. Dans le mode de réalisation préféré de l'invention, ce premier moyen de verrouillage est constitué d'un bouton poussoir 28 qui est destiné à pénétrer dans un orifice 2520 de ladite première pièce terminale 20. Il sera compris que cette configuration n'est pas limitative de l'invention et que le premier moyen de verrouillage 28 pourrait prendre toute autre forme destinée à assurer sa fonction, comme par exemple celle d'un pion ou d'un picot.

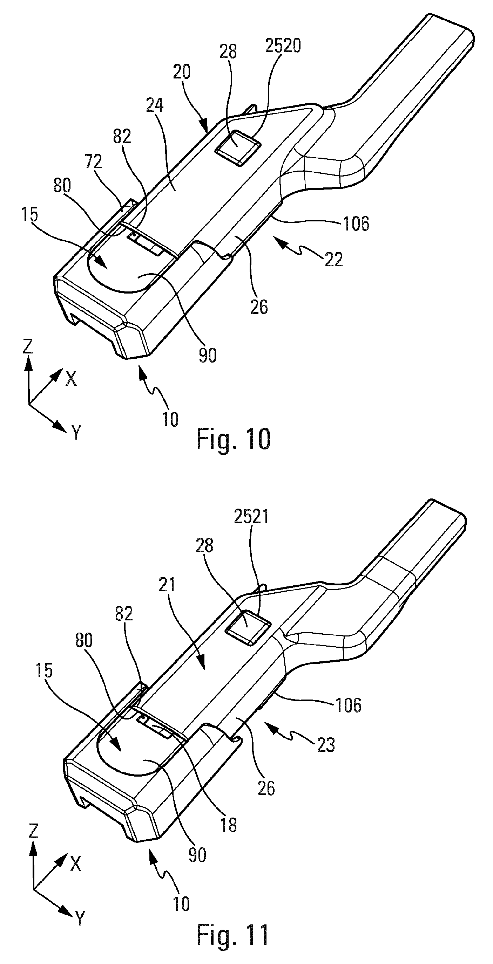

Le bouton poussoir 28 est porté par une première patte élastique 32 qui s'étend au moins en partie dans l'ouverture 30, de manière à permettre un rappel élastique du bouton poussoir 28 qui permet son encliquetage dans l'orifice 2520 de la première pièce terminale 20, comme représenté à la figure 10.

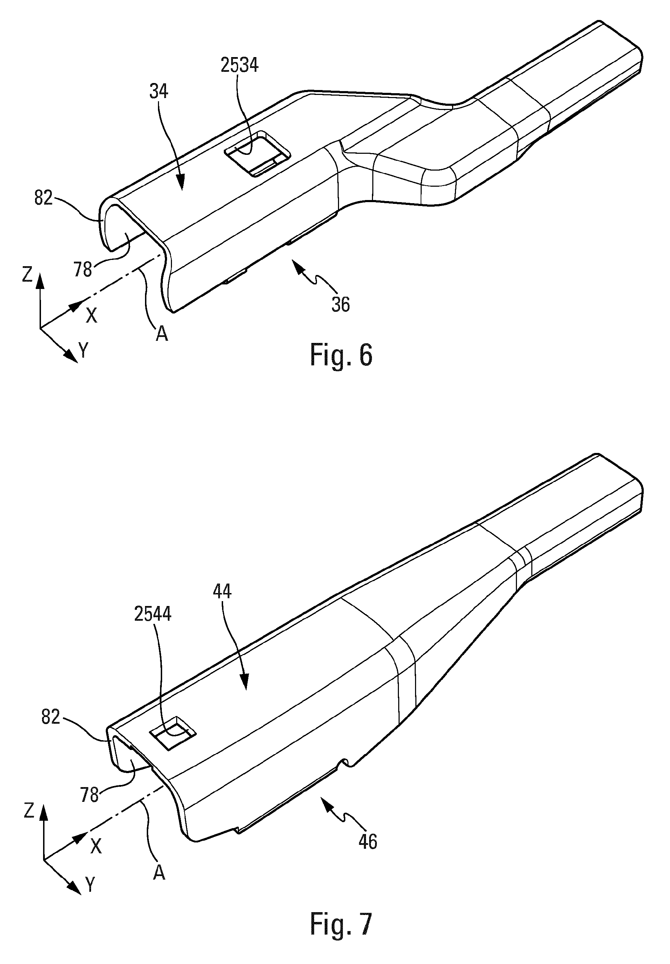

L'organe 10 est configuré pour être sélectivement monté, toujours par translation suivant la direction longitudinale X, dans une pièce terminale 34 d'au moins un bras 36 d'un autre type, telle que représentée à la figure 6. A cet effet, il comporte au moins un deuxième moyen 38 de verrouillage escamotable configuré pour coopérer avec ladite pièce terminale 34 de l'autre bras 36, d'un second type différent du premier type.

Dans le mode de réalisation préféré de l'invention, ce deuxième moyen de verrouillage 38 est constitué d'un deuxième bouton poussoir 38 qui est destiné à pénétrer et à s'encliqueter dans un orifice 2534 de la pièce terminale 34. Il sera compris que cette configuration n'est pas limitative de l'invention et que le deuxième moyen de verrouillage 38 pourrait prendre toute autre forme destinée à assurer sa fonction, comme par exemple celle d'un pion ou d'un picot.

Dans les configurations précédemment connues de l'état de la technique, une pluralité de moyens de verrouillage implique qu'ils sont agencées les uns à la suite des autres de sorte qu'ils présentent un encombrement important selon la direction longitudinale X. Par ailleurs, des interférences mécaniques peuvent survenir notamment au droit des perçages 17, ce qui limite l'implantation de moyen de verrouillage.

L'invention remédie à cet inconvénient en proposant des moyens de verrouillage comportant des moyens de verrouillage inclus les uns dans les autres, de manière à proposer un encombrement longitudinal et vertical réduit.

A cet effet, comme l'illustrent notamment les figures 2A, 2B et 3, l'invention propose un organe 10 dont les première et deuxième pattes élastiques 32, 42 prennent naissance sur la base 16 et s'étendent dans le plan de la base 16 du corps 14. Avantageusement, la première patte élastique 32 comprend au moins une première encoche 40. Le deuxième moyen de verrouillage 38 escamotable s'étend au moins en partie dans la première encoche 40.

Le deuxième moyen de verrouillage 38, qui est constitué de manière non limitative d'un deuxième bouton poussoir 38, est porté par au moins une deuxième patte élastique 42, qui s'étend aussi au moins en partie dans la première encoche 40.

L'organe 10 peut comporter un prolongement 41 de l'encoche 40 qui s'étend dans la base 16. La deuxième patte 42 peut ainsi s'étendre dans la deuxième encoche 40, et dans le prolongement 41 de la première encoche 40. Avantageusement, il existe un plan à partir duquel une flexion des moyens de verrouillage peut être opérée, ce plan étant commun au premier et au deuxième moyen de verrouillage, c'est-à-dire passant par ceux-ci en position de repos.

Comme l'illustre la figure 2A, cette configuration permet de proposer des première et deuxième pattes élastiques 32, 42 et des boutons poussoirs associés 28, 38 présentant un encombrement réduit.

Dans le mode de réalisation préféré de l'invention, la première patte élastique 32 comporte au moins deux bras 33 reliés au corps 14 de l'organe 10, qui délimitent au moins en partie la première encoche 40.

Dans le mode de réalisation préféré de l'invention, la première patte élastique 32 du premier moyen de verrouillage 28 et la deuxième patte élastique 42 du deuxième moyen de verrouillage 38, s'étendent dans le plan de la base 16 du corps 14.

Comme on l'a vu, dans le mode de réalisation préféré de l'invention le premier moyen de verrouillage 28 comprend un premier bouton poussoir 28. Ce premier bouton poussoir 28 est ménagé à une extrémité distale de la première patte élastique 32, ce qui permet de proposer une flexion maximale du premier bouton poussoir 28. Par ailleurs, le premier moyen de verrouillage 28 est logé dans une ouverture 30 formée dans la base 16 du corps 14.

On comprend donc que chaque moyen de verrouillage est au moins constitué d'une patte élastique au bout de laquelle est formé au moins un bouton poussoir.

Dans cette configuration, la deuxième patte élastique 42, qui s'étend au moins en partie dans la première encoche 40, s'étend au moins en partie en regard de l'ouverture 30.

De la même manière, le deuxième moyen de verrouillage 38 comprend de manière préférentielle de l'invention un deuxième bouton poussoir 38 qui formé à une extrémité distale de la deuxième patte élastique 32, ce qui permet aussi de proposer une flexion maximale du deuxième bouton poussoir 38.

Le premier bouton 28 et le deuxième bouton 38 s'étendent dans ou au-dessus du plan de la base 16.

Avantageusement, l'ouverture 30, la première encoche 40, et les première et deuxième pattes élastiques 32, 42 s'étendent suivant la direction longitudinale X de l'organe 10 de manière que les première et deuxième pattes élastiques 32, 42 et les boutons poussoirs associés 28, 38 présentent un encombrement longitudinal E réduit. Cette configuration est de préférence obtenue lorsque les première et deuxième pattes élastiques 32, 42 s'étendent dans le même sens R suivant ladite direction longitudinale X, par exemple vers l'arrière de l'organe 10.

De ce fait, la partie de base 16 de l'organe 10 qui n'est pas occupée par les première et deuxième pattes 32, 42 et les boutons poussoirs associés 28, 38 peut être prévue pour coopérer avec d'autres types de bras, comme on le verra dans la suite de la présente description.

Par ailleurs, les pattes 32 et 42 sont toutes deux situées dans le plan de la base 16, de sorte qu'elles ne peuvent en aucun cas perturber le pivotement du connecteur dans l'organe 10. Les pattes peuvent donc être agencées sensiblement au droit des perçages 17.

Dans le mode de réalisation préféré de l'invention, l'organe 10 est configuré pour être monté par translation suivant la direction longitudinale X puis verrouillé dans des première ou deuxième pièces terminales 20, 21 de de bras 22, 23 de premier ou deuxième types, lesdites pièces terminales ayant été représentées aux figures 4 et 5, par l'intermédiaire du premier bouton 28, ou dans une troisième pièce terminale 34 d'un bras 36 d'un troisième type, telle que représentée à la figure 6, par l'intermédiaire du deuxième bouton 38.

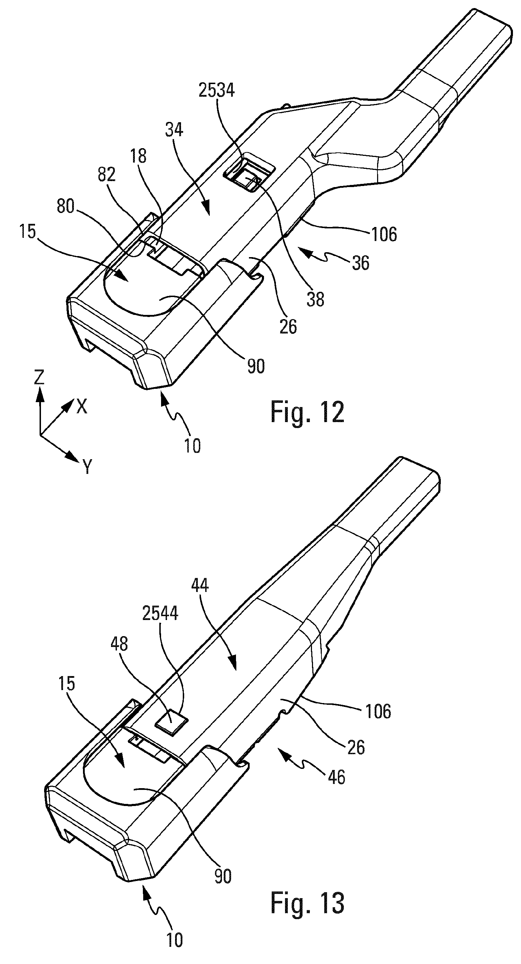

Notamment, le premier bouton poussoir 28 de verrouillage est configuré pour coopérer avec la deuxième pièce terminale 21, en pénétrant dans un orifice 2521 de ladite deuxième pièce terminale 21, et le deuxième bouton poussoir 38 est configuré pour coopérer avec la troisième pièce terminale 34, en pénétrant dans un orifice 2534 de ladite troisième pièce terminale 34, comme représenté respectivement aux figures 11 et 12.

Dans le mode de réalisation préféré de l'invention, le corps 14 comporte une première extrémité 56 par laquelle il est apte à être introduit dans chaque pièce terminale, et une seconde extrémité 58, opposée à la première extrémité 56. La seconde extrémité 58 est en particulier accolée à une tête 15 formée à l'extrémité de l'organe 10.

Dans cette configuration, le premier moyen de verrouillage, constitué au moins du premier bouton poussoir 28 est de préférence plus proche de la première extrémité 56 du corps 14 de l'organe 10 que le deuxième moyen de verrouillage, constitué notamment du deuxième bouton poussoir 38. Cette configuration n'est toutefois pas limitative de l'invention.

On notera que les dimensions du premier bouton poussoir 28 sont plus importantes que les dimensions qui délimitent le deuxième bouton poussoir 38.

La patte élastique du premier moyen de verrouillage s'étend par exemple dans un plan parallèle à la patte élastique du deuxième moyen de verrouillage. L'épaisseur de la patte élastique du deuxième moyen de verrouillage est par exemple égale ou inférieure à l'épaisseur de la patte élastique du premier moyen de verrouillage, la deuxième patte élastique étant alors contenue dans l'encombrement de la première patte élastique.

Comme on l'a vu, la partie de base 16 de l'organe 10 qui n'est pas occupée par les première et deuxième pattes 32, 42 et boutons associés poussoir 28, 38 peut ainsi être prévue pour coopérer avec d'autres types de bras. A cet effet, l'organe 10 est configuré pour être monté par translation suivant la direction longitudinale à une quatrième pièce terminale 44 d'au moins un bras 46 d'un quatrième type, ladite quatrième pièce terminale ayant été représentée à la figure 4. Dans le cas présent, l'organe 10 comporte au moins un moyen de verrouillage escamotable 48, constitué de manière non limitative de l'invention d'un troisième bouton poussoir 48 de verrouillage, qui est configuré pour coopérer avec ladite quatrième pièce terminale 44, ledit troisième bouton 48 étant logé dans une deuxième encoche 50 formée dans la paroi supérieure 16 du corps 14 et porté par une troisième patte élastique flexible 52 qui s'étend transversalement par rapport à la direction longitudinale X à partir d'une paroi du corps 14. Le troisième bouton 48 est destiné à coopérer avec un orifice 2544 de la quatrième pièce terminale 44 du bras 46 du quatrième type.

Comme on peut le concevoir, la disposition transversale de la troisième patte élastique 52 est particulièrement avantageuse en ce qu'elle limite l'encombrement suivant la direction longitudinale X.

De préférence, la troisième patte élastique 52 s'étend à partir d'une face interne 54 d'une des parois latérales 18 du corps 14. Cette configuration permet de proposer une troisième patte élastique inclinée 52 de longueur suffisante pour lui conférer une souplesse permettant la manipulation du troisième bouton poussoir 48, ce qui ne serait pas le cas si la troisième patte élastique était portée par la face supérieure 16 de l'organe 10. Le troisième bouton poussoir 48 est de taille et dimensions intermédiaires aux premier et deuxième boutons poussoirs.

Dans le mode de réalisation préféré de l'invention, le premier bouton poussoir 28, le deuxième bouton poussoir 38 et le troisième bouton poussoir 48 sont disposés en alignement suivant la direction longitudinale X de la première extrémité 56 du corps 14 vers la seconde extrémité 58. Il convient de noter que cette disposition pourrait être inversée sans changer la nature de l'invention, les premier bouton poussoir 28 et deuxième bouton poussoir 38, nécessairement accolés l'un à l'autre, étant alors disposés du côté de la seconde extrémité 58 du corps 14 et le troisième bouton poussoir 48 étant disposé du côté de la première extrémité 56.

On remarquera également que, dans la configuration préférée de l'invention selon laquelle le premier bouton poussoir 28 et le deuxième bouton poussoir 38 sont agencés à proximité de la première extrémité 56 du corps 14, l'ouverture 30 débouche à la première extrémité 56 du corps 14.

Le corps 14 étant de préférence réalisé par injection d'un matériau plastique, cette configuration permet en particulier de simplifier le démoulage dudit corps 14.

La configuration précédemment évoquée permet d'optimiser la répartition des moyens de verrouillage, notamment les boutons poussoirs 28, 38, 48 sur la base 16 de l'organe 10. Toutefois, il est possible de prévoir avantageusement des moyens de verrouillage supplémentaires en les ménageant sur ou dans les parois latérales 18.

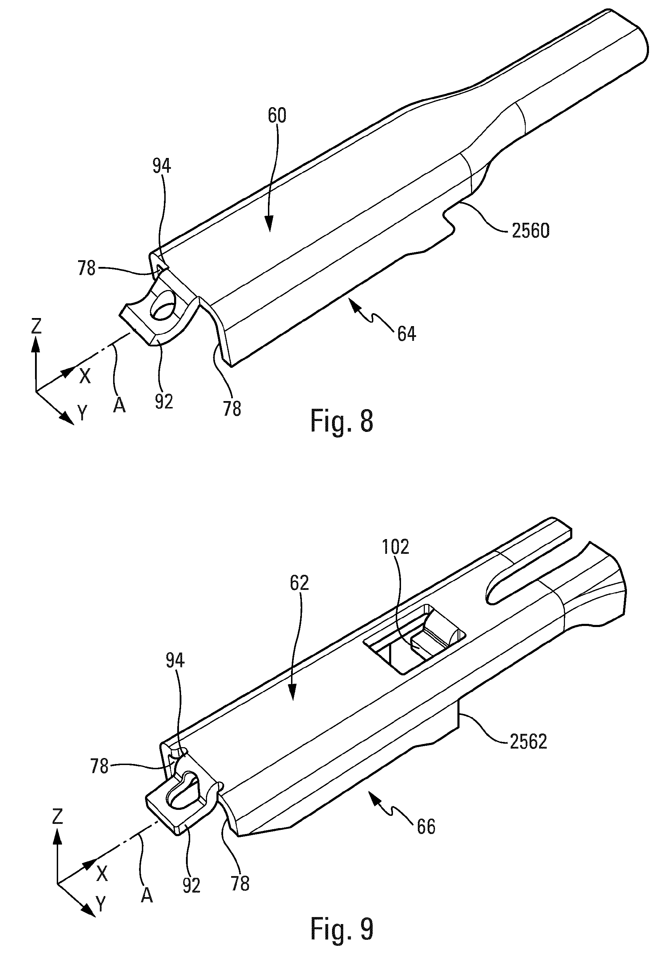

Ainsi, conformément à l'invention, l'organe 10 est également configuré pour être monté par translation suivant la direction longitudinale X dans une cinquième pièce terminale 60 d'un bras 64 d'un cinquième type et dans une sixième pièce terminale 62 d'un bras 66 d'un sixième type qui ont été représentées aux figures 8 et 9. A cet effet, l'organe 10 comporte au moins deux quatrièmes boutons poussoirs 68 de verrouillage latéraux, opposés transversalement, qui sont configurés pour coopérer avec les cinquième et sixième pièces terminales 60, 62. En particulier, la cinquième pièce terminale 60 comporte à cet effet deux encoches latérales 2560 formées à l'extrémité de la cinquième pièce terminale 60, qui sont complémentaires des quatrièmes boutons poussoirs 68. De même, la sixième pièce terminale 62 comporte à cet effet deux encoches latérales 2562 formées à l'extrémité de la sixième pièce terminale 62 qui sont complémentaires des quatrièmes boutons poussoirs 68.

De préférence, comme l'illustrent les figures 2A à 3, les quatrièmes boutons 68 sont portés par des quatrièmes pattes élastiques 70 qui s'étendent longitudinalement à partir de la première extrémité 56 du corps 14 dans le prolongement des parois latérales 18 à partir de l'extrémité 56 du corps 14. Les quatrièmes pattes 70 peuvent ainsi être configurées de manière à présenter une grande longueur apte à conférer la souplesse requise aux quatrièmes boutons 68. Le quatrième bouton poussoirs 68 évoqué ici vient se positionner contre une tranche de la pièce terminale concernée.

Outre les boutons de verrouillage 28, 38, 48, 68, l'organe 10 comporte des moyens de maintien transversal de l'organe 10 dans les différentes pièces terminales 20, 21, 34, 44, 60, 62 des bras 22, 23, 36, 46, 64, 66 sur lesquels il peut être monté.

Ainsi, comme l'illustrent les figures 2A à 3, l'organe 10 comporte des premiers moyens de maintien transversal du premier bras 22. Ces moyens comportent deux ailes 72 qui s'étendent avec jeu à partir de la tête 15 en direction du corps 14 parallèlement aux parois latérales 18 dudit corps 14, et qui déterminent un logement de réception 73 d'au moins une des pièces terminales. Par exemple, les ailes 72 sont destinées à recevoir contre leurs faces intérieures 74 des faces extérieures des parois latérales 26 de la première pièce terminale 20 du premier bras 22, comme représenté à la figure 10.

De la même manière, les parois latérales 18 de l'organe 10 comportent des surfaces externes planes 76 qui forment des seconds moyens de maintien transversal de l'organe 10 par rapport aux deuxième à sixième pièces terminales 21, 34, 44, 60, 62 des bras 23, 36, 46, 64, 66 des deuxième à sixième types. Les parois 18 sont destinées à recevoir des faces intérieures 78 des parois latérales 26 des deuxième à sixième pièces terminales 21, 34, 44, 60, 62. Ces parois ont été représentées aux figures 5 à 9.

On notera qu'une distance mesurée perpendiculairement aux parois latérales 26 et entre celles-ci est identique pour les pièces terminales de premier type et de deuxième type référencées 20 et 21. Cette distance est par exemple égale à 22mm. Ces pièces terminales 20 et 21 comprennent au bout de chaque paroi latérale un bord replié en direction de la paroi latérale opposée. La pièce terminale du deuxième type 21 se distingue de la pièce terminale du premier type 20 par le fait que au moins un des bords repliés, et par exemple les deux, est interrompu, autrement dit discontinu. En d'autres termes, il est prévu plusieurs bords repliés au bout de chaque paroi latérale de la pièce terminale du second type 21.

La troisième pièce terminale 34 diffère de la deuxième pièce terminale 21 seulement par la distance mesurée perpendiculairement aux parois latérales 26 et qui séparent ces dernières. Celle-ci est ici de 19mm.

Outre les moyens de verrouillage et les moyens de maintien transversal, l'organe 10 comporte des moyens de butée longitudinale des différentes pièces terminales des bras sur lesquels il peut être monté.

La tête 15 de l'organe 10 est d'un encombrement transversal suivant la direction Y qui est supérieur à celui du corps 14. De ce fait, elle délimite avec le corps 14, au fond des logements 73, des faces transversales 80 formées à la jonction du corps 14 et de la tête 15, ces faces transversales 80 étant formées à la jonction du corps 14 et de la tête 15 et s'étendant transversalement à partir des parois latérales 18 du corps 14. Ces faces transversales 80 sont configurées pour recevoir en butée une extrémité 82 des première à troisième pièces terminales, comme représenté aux figures 10 à 12, et forment à ce titre des premiers moyens de butée longitudinale des premières à troisième pièces terminales 20, 21, 34 suivant la direction X.

L'organe 10 peut comporter d'autres moyens de butée. Ainsi, la pièce terminale 62 du bras 66 du sixième type comporte une patte complémentaire 102 s'étendant parallèlement sous le plan de la paroi supérieure 24 de cette pièce terminale 62. Dans cette configuration, l'organe 10 comporte des deuxièmes moyens de butée longitudinale pour cette patte 102 du sixième bras 66. Comme l'illustrent les figures 2A à 3, ces deuxièmes moyens de butée comportent deux cinquièmes pattes 100 qui s'étendent transversalement vers l'intérieur du corps 14 à partir des quatrièmes pattes élastiques 70 pour former butée à l'encontre de la patte complémentaire 102 du bras 66 du sixième type.

Outre les moyens de verrouillage 28, 38, 48, 68, les moyens de maintien transversal, et les moyens de butée longitudinale, l'organe 10 comporte des moyens de retenue verticale de l'organe 10 dans les pièces terminales des différents bras 22, 23, 36, 46, 64, 66 suivant la direction verticale Z.

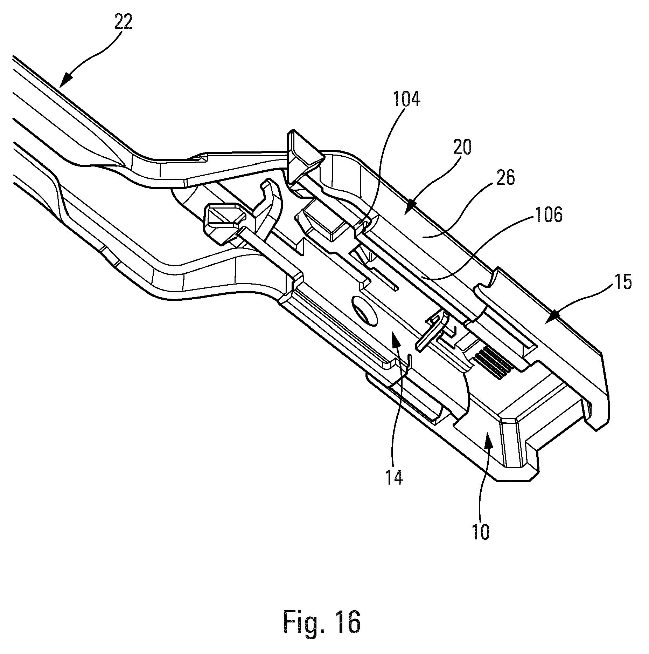

Comme l'illustrent les figures 3 et 16, des bords inférieurs libres 104 des parois latérales 18 du corps 14 forment des premiers moyens de retenue verticale de l'organe 10 dans les première à quatrième pièces terminales 20, 21, 34, 44 aptes à coopérer avec des ailes 106 s'étendant vers l'intérieur à partir des bords inférieurs 108 des parois latérales 110 des bras 22, 23, 36, 46 des premier à quatrième types. Cette configuration a été représentée à titre d'exemple à la figure 16, qui représente la pièce terminale 20 du premier bras 22, dont les ailes 106 sont destinées à retenir les bords inférieurs 104 de l'organe 10.

Chacune des première à quatrième pièces terminales des bras 22, 23, 36, 46 des premier à quatrième types comporte au moins deux ailes 106 analogues.

Avantageusement, l'organe 10 peut déterminer des moyens de retenue verticale complémentaire pour certains types de pièces terminales de bras, en particulier pour les cinquième et sixième pièces terminales 60 et 62 des bras 64 et 66 des cinquième et sixième types qui comportent une patte d'extrémité 92 qui s'étend à partir d'un bord transversal d'extrémité 94 de la paroi supérieure 24 desdites pièces terminales 60, 62 parallèlement à ladite paroi supérieure 24, comme représenté aux figures 8 et 9.

Ainsi, l'organe 10 comporte une troisième encoche 88, qui s'étend à cheval entre la face supérieure 16 du corps 14 et une paroi supérieure 90 de la tête 15. L'encoche 88 est configurée pour recevoir de manière complémentaire la patte 92 d'extrémité complémentaire des cinquième ou sixième pièces terminales 60, 62 qui est ainsi apte à s'étendre sous la paroi supérieure 90 de la tête 16 qui a été représentée à la figure 3.

Les deuxième et troisième encoches 50, 88 sont de préférence voisines. De préférence, pour faciliter le démoulage de l'organe 10 à l'issue de son moulage par injection plastique, les deuxième et troisième encoches 50, 88 communiquent l'une avec l'autre.

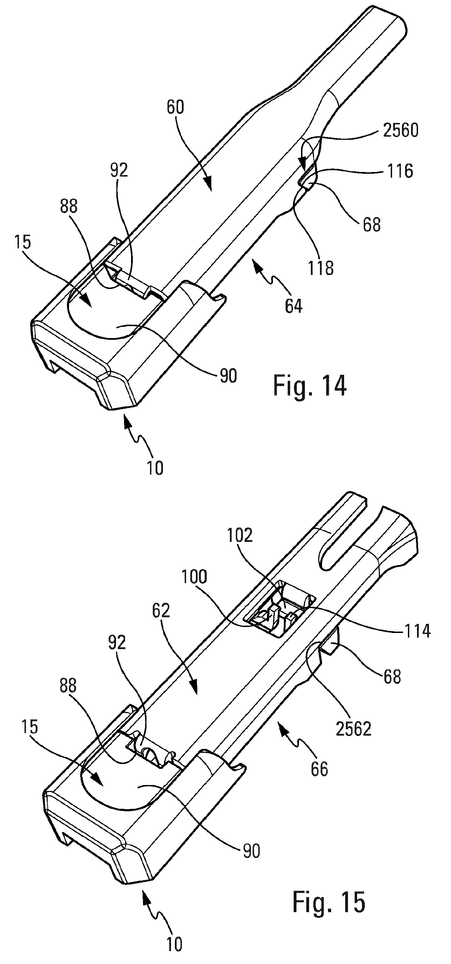

La retenue verticale des pièces terminales peut également être assurée différemment mais de manière complémentaire, notamment en ce qui concerne les cinquième et sixième pièces terminales 60, 62. Ainsi, comme l'illustre la figure 14, des bords 116 des quatrièmes boutons poussoirs 68 de verrouillage latéraux, qui sont inclinés par rapport à la verticale, sont configurés pour coopérer avec des bords 118 complémentaires d'encoches 2560 de réception desdits quatrièmes boutons 68 formées dans la cinquième pièce terminale 60 pour former des moyens de retenue verticale de la cinquième pièce terminale 60. La retenue verticale est donc dans ce cas mutualisée avec les quatrièmes boutons de verrouillage 68.

De même, la retenue verticale peut être mutualisée avec des moyens de butée. Ainsi, comme l'illustre la figure 15, des extrémités supérieures 114 des cinquièmes pattes 100 sont conformées en crochets et destinés à coopérer avec la patte complémentaire 102 de la sixième pièce terminale 60 du sixième bras 66 s'étendant parallèlement sous la face supérieure 24 de ladite pièce terminale 60, de manière à former des moyens de retenue verticale spécifiques audit sixième bras 66.

Les figures 10 à 16 illustrent les différentes pièces terminales 20, 21, 34, 44, 60 et 62 des différents bras 22, 23, 36, 46, 60 ,66 recevant l'organe 10.

Comme l'illustre la figure 10, l'immobilisation de l'organe 10 est assurée par les parois latérales 26 de la première pièce terminale 20 du bras 22 du premier type qui sont reçues dans le logement 73 entre les ailes 72 de l'organe 10, et la butée longitudinale de l'organe 10 est assurée par les faces transversales 80 du fond du logement 73 de l'organe 10 qui sont reçues en butée contre l'extrémité 82 de ladite première pièce terminale 20. La retenue verticale de l'organe 10 est assurée par les ailes 106 de la première pièce terminale 20 du premier bras 22, et le verrouillage de l'organe 10 est assuré par le premier bouton poussoir 28 qui est reçu dans l'orifice 2520 de ladite première pièce terminale 20.

Comme l'illustre la figure 11, l'immobilisation de l'organe 10 est assurée par les parois latérales 26 de la deuxième pièce terminale 21 du bras 23 du deuxième type qui reçoivent les parois latérales 18 de l'organe 10, et la butée longitudinale de l'organe 10 est assurée par les faces transversales 80 de l'organe 10 qui sont reçues en butée contre l'extrémité 82 de ladite deuxième pièce terminale 21. La retenue verticale de l'organe 10 est assurée par les ailes 106 de la deuxième pièce terminale 21 du deuxième bras 23, et le verrouillage de l'organe 10 est assuré par le premier bouton poussoir 28 qui est reçu dans l'orifice 2521 de ladite deuxième pièce terminale 21.

Comme l'illustre la figure 12, l'immobilisation de l'organe 10 est assurée par les parois latérales 26 de la troisième pièce terminale 34 du bras 36 du troisième type qui reçoivent les parois latérales 18 de l'organe 10, et la butée longitudinale de l'organe 10 est assurée par les faces transversales 80 de l'organe 10 qui sont reçues en butée contre l'extrémité 82 de ladite troisième pièce terminale 36. La retenue verticale de l'organe 10 est assurée par les ailes 106 de la troisième pièce terminale 34 du troisième bras 36, et le verrouillage de l'organe 10 est assuré par le deuxième bouton poussoir 38 qui est reçu dans l'orifice 2534 de ladite troisième pièce terminale 34.

Comme l'illustre la figure 13, l'immobilisation de l'organe 10 est assurée par les parois latérales 26 de la quatrième pièce terminale 44 du quatrième bras 46 qui reçoivent les parois latérales 18 de l'organe 10. La retenue verticale de l'organe 10 est assurée par les ailes 106 de la quatrième pièce terminale 44 du quatrième bras 46, et le verrouillage de l'organe 10 ainsi que son immobilisation longitudinale est assurée par le troisième bouton poussoir 48 qui est reçu dans l'orifice 2544 de ladite quatrième pièce terminale 44.

Comme l'illustre la figure 14, l'immobilisation de l'organe 10 est assurée par les parois latérales 26 de la cinquième pièce terminale 60 du cinquième bras 64 qui reçoivent les parois latérales 18 de l'organe 10. La butée longitudinale de l'organe 10 est assurée par les faces transversales 80 de l'organe 10 qui sont reçues en butée contre l'extrémité 82 de ladite cinquième pièce terminale 60. Le verrouillage de l'organe 10 est assuré par les quatrièmes boutons latéraux 68 qui sont reçus dans les encoches 2560, et la retenue verticale de l'organe 10 est assurée par les bords inclinés 116 des quatrièmes boutons poussoirs 68 qui coopèrent avec les bords 118 complémentaires des encoches 2560 de réception desdits quatrièmes boutons 68, et par la quatrième encoche 88 qui reçoit la patte 92 d'extrémité de la cinquième pièce terminale 60 du cinquième bras 64. La butée longitudinale de l'organe 10 peut aussi est assurée en partie par la quatrième encoche 88 qui reçoit la patte 92 d'extrémité de la cinquième pièce terminale 60 du cinquième bras 64.

Enfin, comme l'illustre la figure 15, l'immobilisation de l'organe 10 est assurée par les parois latérales 26 de la sixième pièce terminale 62 du sixième bras 66 qui reçoivent les parois latérales 18 de l'organe 10, et la butée longitudinale de l'organe 10 est assurée par les cinquièmes pattes 100 de l'organe 10 qui s'étendent au contact de la patte complémentaire 102 du sixième bras 66 s'étendant parallèlement sous la paroi supérieure 24 dudit sixième bras 66.

Le verrouillage de l'organe 10 est assuré par les quatrièmes boutons latéraux 68 qui sont reçus dans les encoches 2562, et la retenue verticale de l'organe 10 est assurée par la patte d'extrémité 92 qui s'étend sous la paroi supérieure 90 de la tête 15 et par les extrémités en crochet 114 des cinquièmes pattes 100 pattes qui coopèrent avec la patte complémentaire 102 du sixième bras 66 s'étendant parallèlement sous la paroi supérieure 24 dudit sixième bras 66.

L'invention propose donc un organe 10 formant adaptateur qui est apte à coopérer sélectivement avec un grand nombre de pièces terminales de bras d'essuie-glace, ce qui permet de simplifier considérablement le montage de balais d'essuie-glace 12 à des bras 22, 23, 36, 46, 64, 66 différents.

## Revendications

1. Organe (10) pour un système de connexion entre un balai (12) d'essuie-glace et un bras (22) d'entraînement dudit balai, ledit organe (10) étant d'orientation sensiblement longitudinale (X) et comportant au moins un corps (14) présentant sensiblement une section en forme de U comportant une base (16) et deux parois latérales (18), ledit organe (10) comprenant au moins un premier moyen de verrouillage (28) escamotable configuré pour coopérer avec un bras (22) ayant une pièce terminale (20) d'un premier type, ledit premier moyen de verrouillage (28) comprenant au moins une première patte (32) élastique, ledit organe (10) comprenant au moins un deuxième moyen de verrouillage (38) escamotable configuré pour coopérer avec un bras (36) ayant une pièce terminale (34) d'un second type, ledit deuxième moyen de verrouillage (38) comprenant au moins une deuxième patte (42) élastique, **caractérisé en ce que** les première et deuxième pattes élastiques (32, 42) prennent naissance sur la base (16) et s'étendent au moins en partie dans une épaisseur de la base (16).

2. Organe (10) selon la revendication 1, **caractérisé en ce que** la première patte élastique (32), dite première patte, comporte au moins deux bras reliés à la base du corps de l'organe, entre lesquels est délimitée une encoche (40).

3. Organe (10) selon la revendication 2, **caractérisé en ce que** le deuxième moyen de verrouillage (38) s'étend dans l'encoche (40).

4. Organe (10) selon l'une quelconque des revendications 1 à 3, **caractérisé en ce que** les premier et deuxième moyens de verrouillage (28, 38) sont constitués au moins de premier et deuxième boutons poussoirs respectifs (28, 38) qui s'étendent dans l'épaisseur de la base (16) ou au-dessus de la base (16).

5. Organe (10) selon la revendication 4, **caractérisé en ce que** le premier bouton poussoir (28) est ménagé à une extrémité distale de la première patte élastique (32).

6. Organe (10) selon les revendications 4 ou 5, **caractérisé en ce que** le deuxième bouton poussoir (38) est ménagé à une extrémité distale de la deuxième patte élastique (42).

7. Organe (10) selon l'une quelconque des revendications précédentes, comprenant un moyen (17) de pivotement autour d'un axe transversal (Y'), dans lequel le corps présente la forme d'un U, comprenant au moins la paroi supérieure (16) et les deux parois latérales (18), ménagées au droit du moyen de pivotement (17).

8. Organe (10) selon l'une des revendications précédentes, **caractérisé en ce que** les premières et deuxièmes pattes élastiques (32, 42) s'étendent suivant l'orientation longitudinale (X) de l'organe (10).

9. Organe (10) selon l'une quelconque des revendications précédentes, **caractérisé en ce qu'**il comprend un troisième moyen de verrouillage (48) configuré pour coopérer avec un bras (46) ayant une pièce terminale (44) d'un troisième type, ledit troisième moyen de verrouillage (48) comprenant au moins une troisième patte élastique (52), qui s'étend à partir d'une face interne (54) d'une des parois latérales (18) du corps (14).

10. Organe (10) selon la revendication 9, **caractérisé en ce que** le corps (14) comporte une première extrémité (56) par laquelle il est apte à être introduit dans chaque pièce terminale, et une seconde extrémité (58) opposée à la première extrémité (56), et **en ce que** les premier, deuxième et troisième moyens de verrouillage (28, 38, 48) sont alignés longitudinalement entre les première et seconde extrémités (56, 58).

11. Organe (10) selon la revendication 10, **caractérisé en ce qu'**il comprend un quatrième moyen de verrouillage (88) configuré pour coopérer avec un bras ayant une pièce terminale d'un quatrième type, ledit quatrième moyen de verrouillage (48) comprenant au moins une quatrième patte élastique (70), qui s'étend dans le prolongement d'au moins une des parois latérales (18) du corps (14).

12. Organe (10) selon l'une des revendications 10 ou 11, **caractérisé en ce qu'**il comporte une tête (15) formée à la seconde extrémité (58) de l'organe (10).

13. Organe (10) selon la revendication précédente, **caractérisé en ce qu'**un logement (73) de réception d'au moins l'une des pièces terminales du bras est agencé entre le corps (14) et au moins une aile, latérale au corps (14), issue de la tête (15).

14. Organe (10) selon l'une quelconque des revendications précédentes, **caractérisé en ce qu'**il est réalisé par injection d'un matériau plastique.

15. Balai (12) d'essuie-glace comportant un organe (10) selon l'une des revendications 1 à 14.
